# EUROPÄISCHE PATENTSCHRIFT

(11) **EP 0 532 567 B1**
(45) Veröffentlichungstag und Bekanntmachung des Hinweises auf die Patenterteilung: **20.07.1994**
(21) Anmeldenummer: 91910284.8
(22) Anmeldetag: 30.05.1991
(51) Int. Cl.: F02B 53/08, F01C 11/00

(54) **DREHKOLBENBRENNKRAFTMASCHINE**
ROTARY PISTON INTERNAL COMBUSTION ENGINE
MOTEUR A COMBUSTION INTERNE A PISTONS ROTATIFS

(30) Priorität: 01.06.1990 DE 4017760
(43) Veröffentlichungstag der Anmeldung: 24.03.1993
(73) Patentinhaber: MOTOS MOTOR-TECHNIK GMBH, D-49134 Wallenhorst (DE)
(72) Erfinder: OSTERBURG, Günter, D-4500 Osnabrück (DE); STALLKAMP, Heinrich, D-4512 Wallenhorst (DE)
(74) Vertreter: Busse & Busse Patentanwälte
(86) Internationale Anmeldenummer: EP9101003
(87) Internationale Veröffentlichungsnummer: WO9119088

(56) Entgegenhaltungen:
- WO-A-86/06791
- WO-A-90/02259
- AU-C- 61 132
- DE-A- 3 306 256

## Beschreibung

Die Erfindung betrifft eine Drehkolbenbrennkraftmaschine nach dem Oberbegriff des Anspruchs 1, wie sie beispielsweise aus der europäischen Patentschrift 0 223 798 bekannt ist.

Das Grundprinzip der gattungsgemäß in Betracht gezogenen Drehkolbenbrennkraftmaschine weist eine Reihe von Vorteilen auf, zu denen nicht nur der insbesondere für hohe Drehzahlen zu fordernde unwuchtfreie Lauf von Drehkolben, sondern auch die funktionell abgestimmte Größe der Arbeitsräume gehört. Schwierigkeiten bei der bekannten Drehkolbenbrennkraftmaschine bereitet die Umfangskontur der Drehkolben, die jeweils scharfkantig auslaufen und mit diesen scharfen Kanten eine dichtende Anlage gegenüber dem anderen Drehkolben erzeugen sollen. Weiterhin bereiten die Ventilfunktionen Schwierigkeiten insofern, als sie hohe Gasgeschwindigkeiten voraussetzen. Die periodisch wechselnden Gasdruckverhältnisse führen überdies zu Pulsationen in der Brennkammer, die die kontinuierliche Expansionsgasbereitstellung nachteilig beeinflussen. Anteil an diesen Schwierigkeiten hat auch die stark geschrägte und scharf auslaufende Kontur der Drehkolben.

Aufgabe der Erfindung ist es dementsprechend, eine Drehkolbenbrennkraftmaschine zu schaffen, die eine kompaktere Konfiguration der Drehkolben ermöglicht, die dabei eine großflächige Auslegung der Ventilöffnungen zuläßt und die Pulsation in der Brennkammer glättet.

Gemäß der Erfindung wird diese Aufgabe von einer Drehkolbenbrennkraftmaschine nach dem Oberbegriff des Anspruchs 1 ausgehend mit den kennzeichnenden Merkmalen des Anspruchs 1 gelöst. Die Auslegung mindestens eines Drehkolbensystems mit zwei symmetrisch zu einer gemeinsamen Achse umlaufenden Kolbenläufern eröffnet einen Weg zu stärker abgerundeten und kompakteren Kolbenformen, die eine ganze Reihe von Vorteilen wie eine gleichmäßige Temperaturverteilung, eine gleichmäßige Kühlung, einen gleichmäßigeren Verschleiß an den Umfangsflächen und relativ lange und damit labyrinthartig wirkende Dichtungsspalte erbringen. Die Effektivität des Laufes der Maschine wird durch eine Verringerung der Luftpulsation in der Brennkammer wesentlich verbessert, da die pro Arbeitstakt expandierende Gasmenge auf zwei Einleitungs- und Ausschiebetakte verteilt wird. Nicht zuletzt wird aber auch erreicht, daß die kompaktere Kolbenform mit vorwiegend radial gerichteten Stirnflächen einfachere Ventilöffnungsformen an den Steuerkörpern erlauben, mit denen sich kritische Strömungen und hohe Strömungsverluste infolge hoher Gasgeschwindigkeiten beim Befüllen und Entleeren von Arbeitsräumen der Brennkraftmaschine vermeiden lassen.

Die Auslegung eines Kolbensystems als Doppelkolbensystem gestattet es weiterhin, diesem sowohl die Verdichtung wie auch die Expansion von Gasen in Teilbereichen seines Ringraums zu übertragen, so daß das andere System grundsätzlich nur noch als Absperrkolbenläufer zu wirken braucht.

Dabei kann das Doppelkolbensystem durch Steuerkörper phasenweise einerseits mit einem Abströmkanal zur Brennkammer und andererseits mit einem Heißgaskanal aus der Brennkammer verbunden sein, so daß ein komprimierend wirkender Arbeitsraum zwischen einem Kolbenläufer und dem Absperrkolben am Ende seiner Kompressionsphase zur Brennkammer hin geöffnet wird und diese hier mit komprimiertem Gas (komprimierter Luft) versorgt, während auf der anderen Seite ein Expansionsraum zwischen dem anderen Kolbenläufer und dem Absperrkolben zu Beginn seiner Expansionsphase hin über die Steuerkörper an die Brennkammer angeschlossen wird und damit arbeitsfähiges Gas hohen Druckes erhält.

Die Steuerkörper können seitliche Plattendrehschieber mit Steueröffnungen umfassen. Insbesondere aber umfassen die Steuerkörper eine die Kolbenläufer tragende Hohlnabe mit axial verlaufenden Steuerschlitzen. Die Gaszufuhr oder -abfuhr über die Hohlnabe öffnet den Weg zu einfachen und großflächigen Steueröffnungen, wobei die Hohlnabe mit einem Walzendrehschieber zusammenwirkt. Wenn dieser umlaufende Walzendrehschieber die Hohlnabe umschließt (und mit geschlossener Umfangskontur in die beiden Drehkolben übergeht), müßte sich der Absperrkolbenläufer auf eine tangentiale linienförmige Anlage zum Doppelkolbensystem hin beschränken. Im Sinne tiefer (in Umfangsrichtung also langgestreckter) Dichtspalte kann demgegenüber vorgesehen werden, daß die feststehende Hohlnabe direkt an den zugehörigen Ringraum angrenzt und daß die beiden Leistungskolbenläufer einzeln gegenüber der Hohlnabe umlaufen. Dann kann die Hohlnabe mit einer Hohlkehle versehen werden, die der Umlaufbahn des Absperrkolbenläufers angeschmiegt ist. Die Steuerfunktion wird dann mit einem Walzendrehschieber erzielbar, der innerhalb der Hohlnabe mit dem Doppelkolbensystem umläuft.

Es versteht sich, daß die umlaufenden Steueröffnungen des Systems für die Kompressionsseite kurz vor dem Kolbenläufer anzuordnen sind und daß die zugeordneten feststehenden Steueröffnungen nahe der Bahn des Absperrkolbenläufers liegen. Auf der anderen Seite liegen die umlaufenden Steueröffnungen für die Expansionsseite kurz hinter dem Kolbenläufer und die feststehenden Öffnungen für die Zufuhr der Heißgase auf der anderen Seite knapp außerhalb der Bahn des Absperrkolbenläufers. Um zu vermeiden, daß die umlaufenden Steueröffnungen für den Kompressionsbereich mit den feststehenden Öffnungen für den Expansionsbereich (und umgekehrt) zusammenarbeiten, sind die Öffnungen radial so weit gegeneinander versetzt (soweit sie überhaupt gemeinsam an Plattendrehschiebern angeordnet sind), daß keine Überschneidungen eintreten.

Der Absperrkolbenläufer kann funktionell in den Weg des Gases nach Art eines Förderers eingeschaltet werden, indem er seinen Ringraum abwechselnd zu einem Lufteinlaß einerseits und zu einem Luftauslaß andererseits öffnet und damit dem Leistungskolbensystem die Luft zufördert. Der Absperrkolbenläufer kann dabei eine umfangsseitig geschlossene Kontur aufweisen, so daß nur an der Außenseite Dichtspalte auftreten, die überdies sehr lang in Umfangsrichtung sind. Zweckmäßig ist der Absperrkolbenläufer als Hohlkolben ausgebildet, was auch die Möglichkeit eröffnet, ihn vollkommen auszuwuchten.

In einer alternativen Ausführung ist auch das Absperrkolbensystem als Doppelkolbensystem ausgebildet. Auch dieses kann eine Förder- bzw. Kompressorfunktion übernehmen. Der Vorteil dieser Bauweise ist, daß beide Kolbensysteme mit gleicher Drehzahl umlaufen, so daß die Drehzahl des Systems nicht durch den Absperrkolbenläufer allein begrenzt ist.

Weitere Merkmale und Vorteile der Erfindung ergeben sich aus der nachfolgenden Beschreibung, in der zwei Ausführungsbeispiele den Gegenstand der Erfindung anhand einer Zeichnung näher erläutern. In den eine axiale Ansicht der Drehkolben wiedergebenden Figuren soll der linke Drehkolben (Drehkolbensystem A) gegen den Uhrzeigersinn umlaufen, während das andere Drehkolbensystem B im Uhrzeigersinn um eine eigene Achse umläuft.

In der Zeichnung zeigen:
- Fig. 1: Schnitt durch eine erste Ausführungsform mit einem Doppelkolben im Drehkolbensystem B, in Richtung der Drehachsen gesehen,
- Fig. 2 bis 5: schematische Teil-Schnittdarstellungen entsprechend Fig. 1 bei verschiedenen Umlaufphasen,
- Fig. 6: Schnitt nach Linie VI-VI in Fig. 1,
- Fig. 7: Schnitt nach Linie VII-VII in Fig.1,
- Fig. 8: Schnitt nach Linie VIII-VIII in Fig. 1,
- Fig. 9: Schnitt durch eine zweite Ausführungsform mit Doppelkolben in den Drehkolbensystemen A und B, in Richtung der Drehachse gesehen,
- Fig. 10, 11 u. 12: schematische Teil-Schnittdarstellung entsprechend Fig. 9 bei verschiedenen Umlaufphasen,
- Fig. 13: Schnitt nach Linie XIII-XIII in Fig. 9,
- Fig. 14: Schnitt nach Linie XIV-XIV in Fig. 9,
- Fig. 15: Schnitt nach Linie XV-XV in Fig. 9.

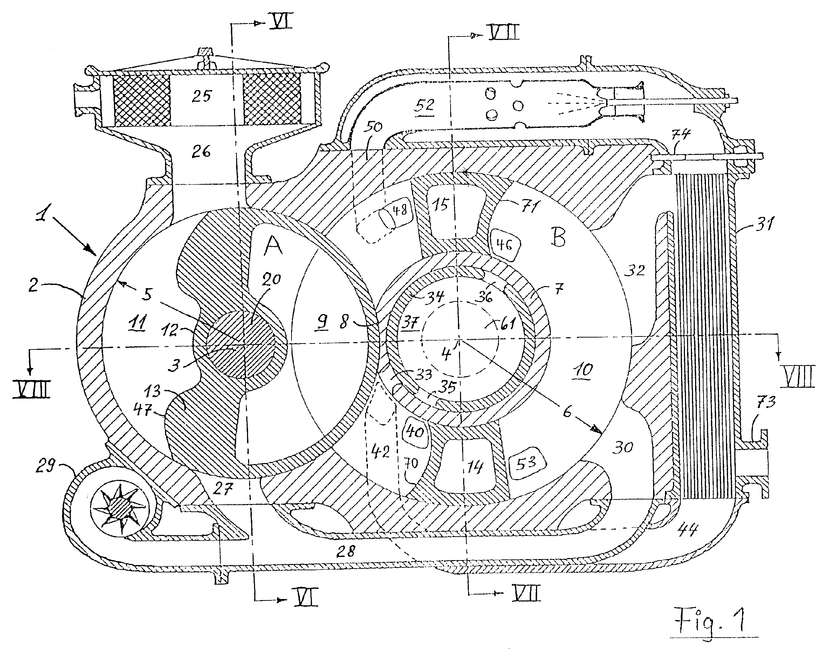

Die aus den Fig. 1 bis 8 ersichtliche, insgesamt mit 1 bezeichnete Drehkolbenbrennkraftmaschine umfaßt einen Gehäuseblock 2, der innenseitig eine zylindrische Kammer mit einem freien Innenquerschnitt in Form zweier einander bereichsweise überdeckender Kreisflächen bildet. Die Mittelpunkte dieser Kreisflächen liegen auf Achsen 3,4. Der auf die Achse 3 zentrierte Kreisquerschnitt hat einen ersten kleineren Radius 5, der auf der Achse 4 zentrierte Kreiscuerschnitt hat einen (gegenüber dem Radius 5 um etwa 25%) größeren Radius 6.

Weiterhin ist um die Achse 4 eine stillstehende Hohlnabe 7 angeordnet, die im wesentlichen am Umfang kreiszylindrisch ausgebildet ist. Die Hohlnabe 7 weist zur Achse 3 zugewandten Seite eine Hohlkehle 8 in Anpassung an einen Durchdringungsbereich 9 der beiden Kreisquerschnitte im Zylinderblock auf. Damit wird um die Hohlnabe 7 ein Ringraum 10 gebildet. Der zweite Ringraum 11 entsteht um die mitlaufende Nabe 12 des Absperrkolbenläufers 13. Die Ringräume 10 und 11 überschneiden sich im Durchdringungsbereich 9.

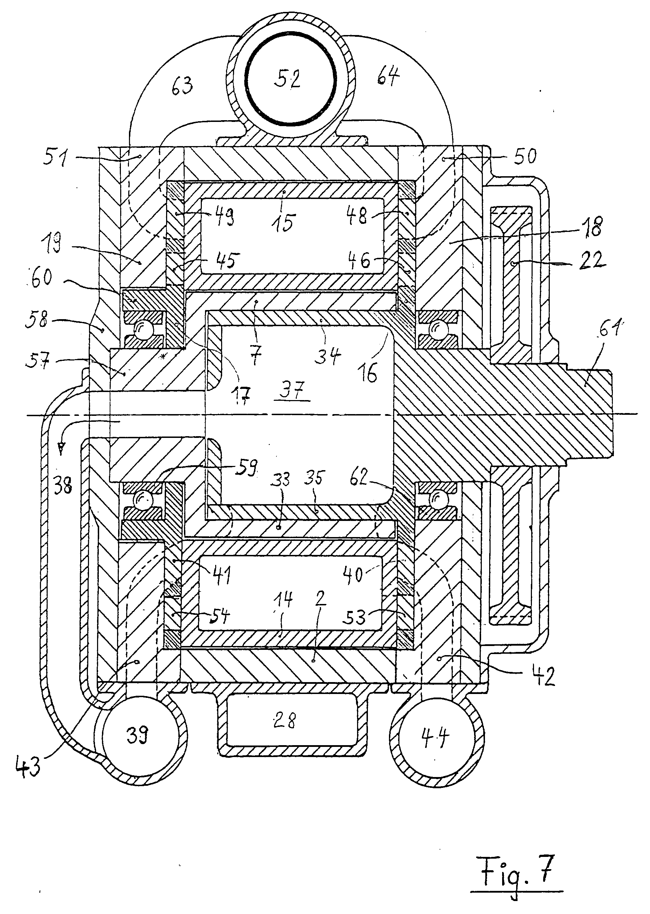

Im Ringraum 10 befinden sich zwei um 180° versetzte Leistungskolbenläufer 14,15, die mit ihren Seitenflächen an zwei Plattendrehschiebern 16,17 (Fig. 7) angeordnet sind und somit einen stabilen Leistungsrotor bilden.Die Plattendrehschieber 16,17 sind versenkt in zwei Seitengehäuseplatten 18,19 (Fig. 7) angeordnet.

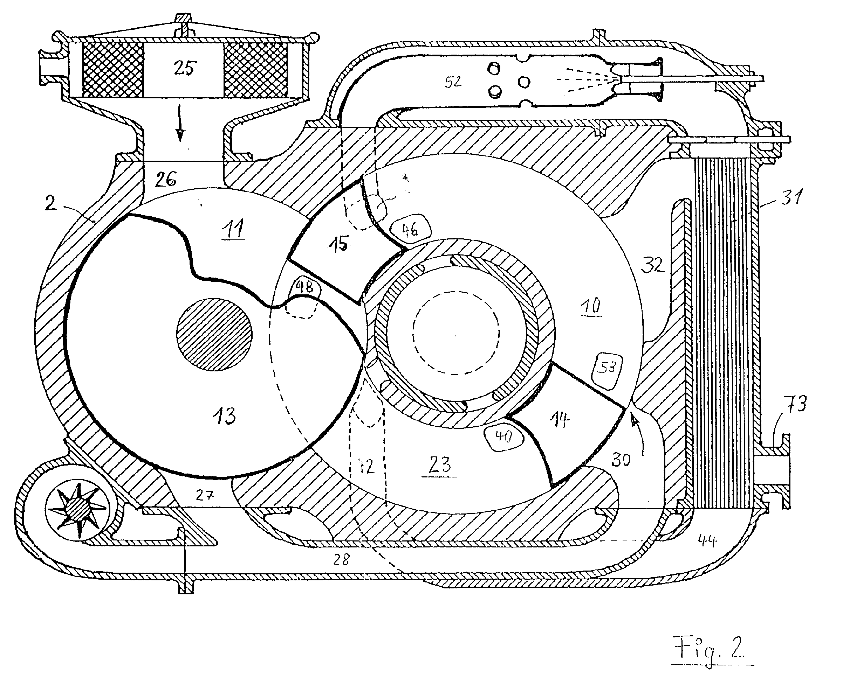

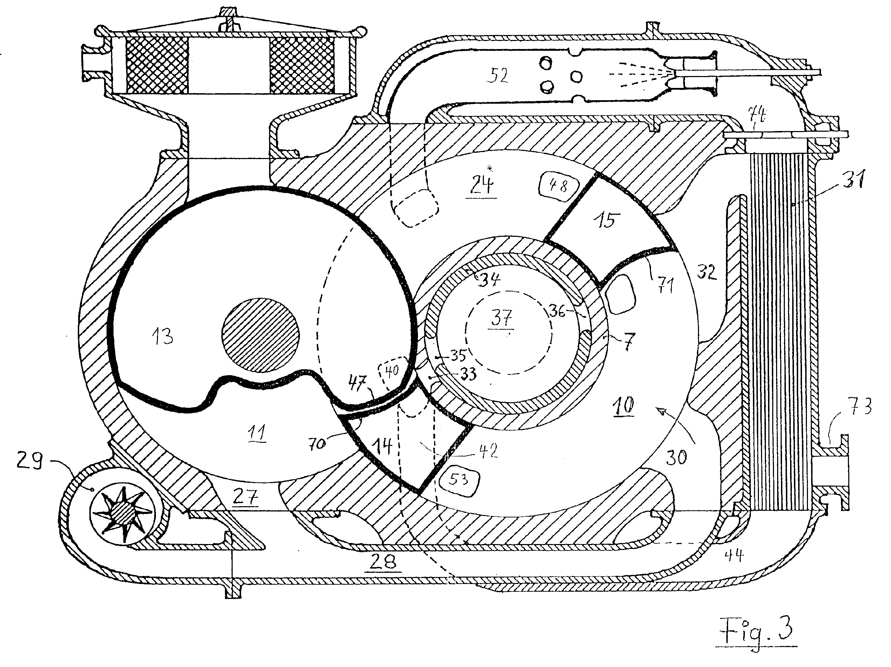

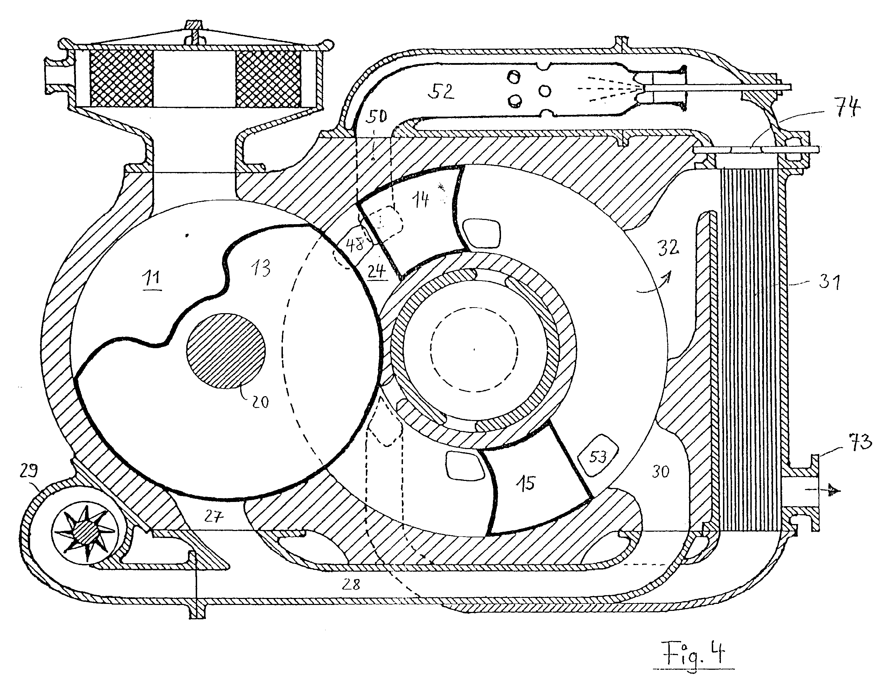

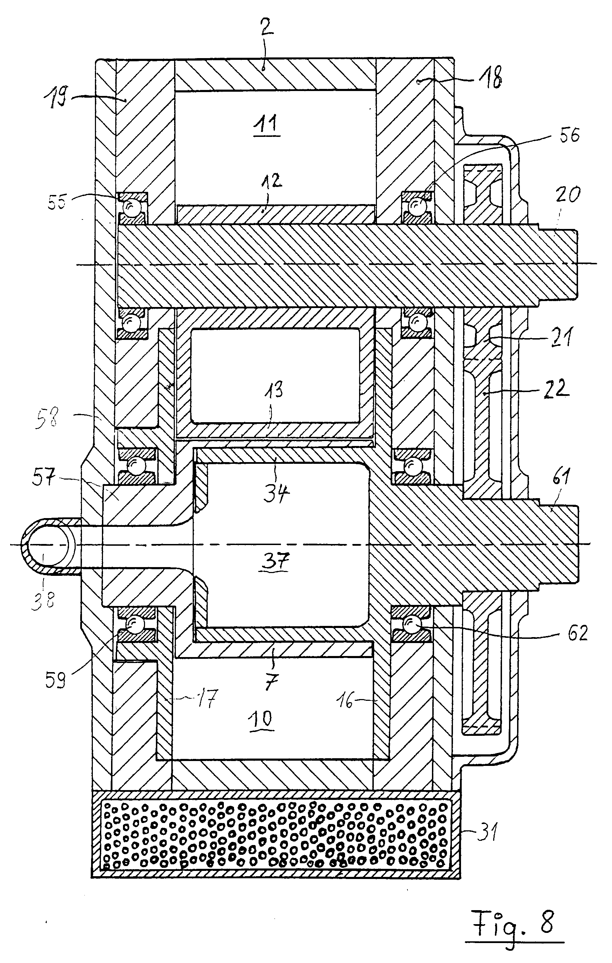

Der in sich ausgewuchtete Absperrkolbenläufer 13 (Fig. 1) ist mit der Nabe 12 auf einer Welle 20 befestigt. Der Absperrkolbenläufer 13 und die Leistungskolbenläufer 14,15 sind durch zwei Stirnzahnräder 21,22 (Fig. 8) mit einem Übersetzungsverhältnis 2:1 gekoppelt. Die doppelte Drehzahl des Absperrkolbenläufers 13 gegenüber der der Leistungskolbenläufer 14,15 hat beachtliche Vorteile, z.B.:
- ein schnelles und besseres Absperren des Verdichterraumes 23 (Fig. 2) und des Expansionsraumes 24 (Fig. 3), bedingt durch längere Dichtflächenbildung, und
- Erzeugung größerer Luftmengen mit Vorverdichtung durch höhere Drehzahl des Absperrkolbenläufers 13.

Fig. 2 bis 5 stellen verschiedene Umlaufphasen dar. Durch einen Luftfilter 25 (Fig. 2) und eine Lufteinlaßöffnung 26 strömt die Frischluft infolge Volumenvergrößerung in den Ringraum 11.

Bei Fig. 3 wird ein Teil der Frischluft, bedingt durch Volumenverkleinerung des Ringraumes 11, durch eine Luftauslaßöffnung 27 in eine Überströmleitung 28 geschoben. Die Frischluftmenge kann durch ein kleines Luftgebläse 29, das von der Welle 20 angetrieben wird (nicht dargestellt), vergrößert werden. Diese vorverdichtete Frischluft strömt durch eine Frischlufteinlaßöffnung 30 in den Ringraum 10. Weil der Druck der vorverdichteten Frischluft im Ringraum 10 immer höher ist als der Abgasgegendruck des Wärmetauschers 31, ist es unmöglich, daß heiße Restabgase in den Kompressionsraum 23 (Fig. 2) gelangen können, weil ein Teil der Frischluft die Restabgase durch die großdimensionierte Abgasausströmöffnung 32 ausspült (Fig. 3). Ein weiterer Vorteil dieses Spülverfahrens ist, daß mit hohem Füllungsgrad gefahren werden kann. In Fig. 2 hat der Absperrkolbenläufer 13 den Kompressionsraum 23 geschlossen. Der Leistungskolbenläufer 14 steht am Anfang der Verdichtung. In Fig. 3 ist die Endverdichtung durch den Leistungskolbenläufer 14 nahezu abgeschlossen. Ein Teil der Druckluft wurde durch den axialen Schlitz 33, der sich in der Nabe 7 befindet, in der sich auch ein Walzendrehschieber 34 mit zwei Steueröffnungen 35,36 dreht, in einen Innenraum 37 eingelassen (Fig. 3), von wo sie durch eine Abströmleitung 38 (Fig. 7) zu einer Abströmdruckleitung 39 weiter zum Wärmetauscher 31 strömt. Ein weiterer Anteil der Druckluft kann durch die Steueröffnungen 40,41 strömen, die sich in den seitlichen Plattendrehschiebern 16,17 befinden und mit zwei Abströmkanälen 42,43 (Fig. 7) zusammenarbeiten, weiter durch die Abströmdruckleitungen 39,44 zum Wärmetauscher 31 strömen. Beidseitig einander gegenüberliegende Steueröffnungen 45,46 sind dem Leistungskolbenläufer 15 zugeordnet.

Fig. 7: Bedingt durch die drei großdimensionierten Abströmöffnungen im Verdichterteil vergrößert sich der schädliche Raum geringfügig. Es hat sich jedoch gezeigt, daß bei hochdrehenden Maschinen die Luftgeschwindigkeit in den Abströmöffnungen 150 m/s nicht wesentlich überschreiten darf, weil die Drosselverluste dann überproportional zunehmen.

Um eine präzise Flächenabdichtung (Fig. 3) zwischen gekrümmten Stirnkolbenflächen 70,71 der Leistungskolbenläufer 14,15 mit einer Stirnfläche 47 des Absperrkolbenläufers 13 zu erreichen, sind drei Faktoren von Bedeutung:
1. Achsabstand der Drehkolbensysteme A,B,
2. Durchmesser des Absperrkolbenläufers 13,
3. Durchmesser der Leistungskolbenläufer 14,15.

Durch umfangreiche Reihenuntersuchungen an Modellen konnten die optimalen asymmetrischen Kurven von zwei Stirnkolbenflächen 70,71 und dazu passende asymmetrische Kurve der Stirnfläche 47 des Absperrkolbenläufers 13 gefunden werden. In Fig. 4 hat der Absperrkolbenläufer 13 den Expansionsraum 24 geschlossen. Der Leistungskolbenläufer 14 steht am Anfang der Expansion. Die Heißgaseinströmöffnungen 48,49 der Plattendrehschieber 16,17 öffnen jetzt die in den Seitengehäuseplatten 18,19 eingelagerten Heißgaskanäle 50,51 der druckbeaufschlagten Brennkammer 52 (Fig. 7), so daß das Arbeitsgas im Expansionsraum 24 hinter den Leistungskolbenläufer 14 eingelassen wird (Fig. 4). Die Heißgaseinströmöffnungen 53,54 befinden sich um 180° zu den Heißgaseinströmöffnungen 48,49 versetzt in den Plattendrehschiebern 16,17 (Fig. 7).

Die Heißgaseinströmöffnungen 48,49 bzw. 53,54 liegen auf einem größeren Radius als die Frischlufteinströmöffnungen 40,41 bzw. 45,46 in den jeweiligen Plattendrehschiebern 16,17 hinter bzw. vor den Kolbenläufern. Damit sind die Steueröffnungen, die im Umfangswinkel gegeneinander versetzt sein müssen, durch unterschiedliche Bahnradien voneinander getrennt.

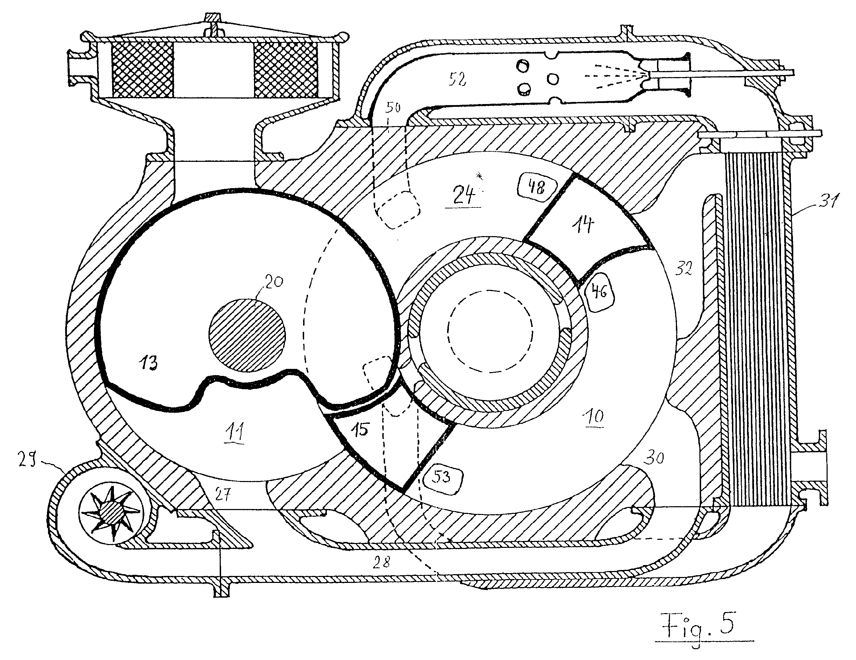

In Fig. 5 hat der Leistungskolbenläufer 14 fast die Endexpansionsstellung erreicht, während der Leistungskolbenläufer 15 fast die Endkompressionsstellung erreicht hat. In Fig. 5 ist auch gut zu erkennen, daß ein Teil der Expansionsarbeit direkt auf die Kompressionsarbeit übertragen wird, ohne daß der Zahnradsatz damit belastet wird. Er muß lediglich nur das geringe Drehmoment der Vorverdichtung des Absperrläufers und die Beschleunigungs- und Verzögerungskräfte aufnehmen.

In Fig. 2 hat der Leistungskolbenläufer 14 die großdimensionierte Abgasöffnung 32 im Gehäuseblock 2 geöffnet, so daß ein großer Teil der heißen Abgase durch den Wärmetauscher 31, der nach dem Gegenstromprinzip arbeitet, zu einem Abgasstutzen 73 abgeströmt ist. Während in Fig. 2 der Leistungskolbenläufer 14 die Frischlufteinlaßöffnung 30 öffnete und dadurch ein Überdruck im Ringraum 10 entsteht, steht der Leistungskolbenläufer 15 am Anfang seiner Abgasausschiebestellung. In Fig. 3 hat der Leistungskolbenläufer 15 fast die Endstellung des Ausschiebetaktes erreicht. Bedingt durch die Vorverdichtung der Frischluft im Ringraum 10 wurden die Restabgase und ein kleiner Anteil der Frischluft durch die Abgasöffnung 32 ausgeschoben.

Obwohl bedingt durch den hohen Verbrennungswirkungsgrad durch kontinuierliche Verbrennung in der Brennkammer 52 der Schadstoffausstoß sehr gering ist, wird sich ein Beimischen von Frischluft im heißen Abgasstrom bedingt durch Spülverluste positiv auf die weitere Schadstoffreduzierung auswirken, weil hierdurch eine Nachoxidation eintritt. Um einen hohen Gesamtwirkungsgrad zu erzielen, ist eine möglichst hohe Prozeßtemperatur anzustreben. Wenn eine Abgastemperaturabsenkung bedingt durch Spülluftbeimischung erfolgt, können die Werkstoffe des Wärmetauschers 31 preiswerter sein. Um einen möglichst hohen Arbeitsdruck im Verdichtersystem aufbauen zu können, wird beim Start der Drehkolbenbrennkraftmaschine 1 ein Ventil 74 vor der Brennkammer 52 geschlossen (Fig. 4).

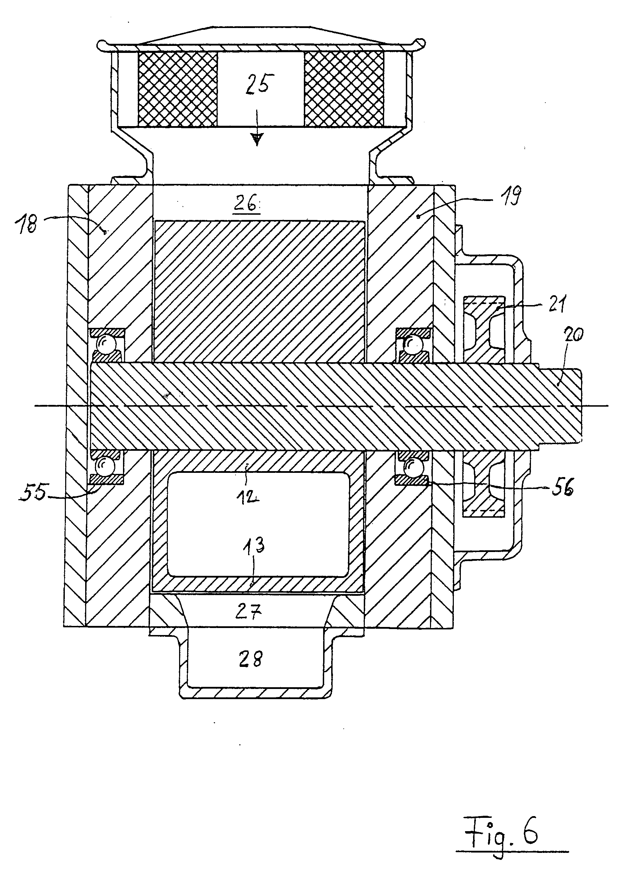

Der aus Fig. 6 zu ersehende Schnitt durch den Bereich des Absperrkolbenläufers 13 gibt näheren Aufschluß über den konstruktiven Aufbau der Drehkolbenbrennkraftmaschine 1. In den beiden Gehäuseseitenplatten 18,19 sind Wälzlager 55,56 angeordnet, die eine Welle 20 aufnehmen. Der Absperrkolbenläufer 13 und das Stirnzahnrad 21 sind fest mit der Welle 20 verbunden.

In Fig. 6 sind der Luftfilter 25, die Frischlufteinlaßöffnung 26, Frischluftauslaßöffnung 27 und die Überströmleitung 28 zu sehen.

Eine schnittbildliche axiale Ansicht durch den Bereich der Leistungskolbenläufer 14,15 (Fig. 7) gibt näheren Aufschluß über den konstruktiven Aufbau der Drehkolbenbrennkraftmaschine 1. Die Leistungskolbenläufer 14,15 sind mit den Plattendrehschiebern 16,17 fest verbunden, die in den Seitengehäuseplatten 18,19 versenkt eingelagert sind.

Ein zylindrisch geformter Endstutzen 57 der Hohlnabe 7 ist mit einer Seitentragplatte 58 fest verschraubt und bildet eine starre Einheit. Der Endstutzen 57 nimmt ein Wälzlager 59 auf. Das umlaufende Außengehäuse des Wälzlagers 59 ist an einem Stützring 60 befestigt, der mit dem Plattendrehschieber 17 verbunden ist. Der Walzendrehschieber 34 und eine Abtriebswelle 61 bilden mit dem Plattendrehschieber 16 eine feste Einheit. Das stillstehende Außengehäuse eines Wälzlagers 62 ist mit der Seitengehäuseplatte 18 verbunden, während das Innengehäuse des Wälzlagers 62 mit der Abtriebswelle 61 umläuft.

Heißgasführende Verteilerrohre der Brennkammer 52 sind mit 63 und 64 bezeichnet. Fig. 8 zeigt den sehr kompakten und einfachen Aufbau dieser Brennkraftmaschine 1, die sich besonders als Schnelläufer, und somit durch hohe Energiedichte auszeichnet.

Dieses neuartige Drehkolbensystem kann auch für andere Kraft- und Arbeitsmaschinen zur Anwendung kommen, z.B. Expansionsmaschinen, Verdichter und Lader.

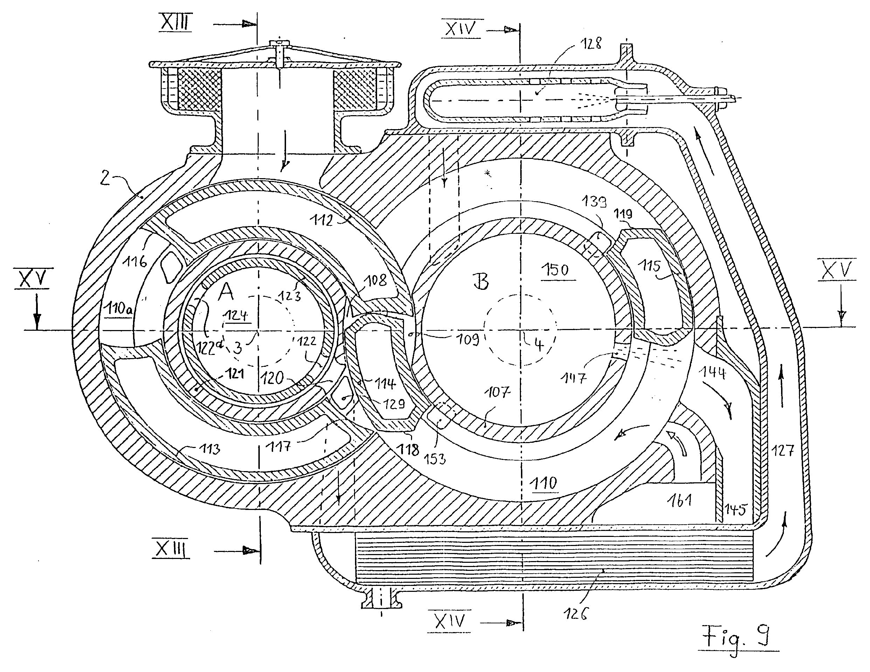

In einer zweiten Ausführungsform nach Fig. 9 bis 15 sind beide von zwei Drehkolbensystemen A,B mit zwei Doppelkolben 112,113,114,115 ausgebildet. Mit dieser Gestaltung der Drehkolbenbrennkraftmaschine ist eine extrem hohe Drehzahlfestigkeit und somit hohe Energiedichte zu erreichen, weil erstens der systembedingte Aufbau gut ausgewuchtet ist und ohne massierte Ausgleichsgewichte auskommt, zweitens beide Kolben mit gleicher Drehzahl laufen (Drehzahl- verhältnis 1:1) und somit beide auf Grenzdrehzahlen ausgelegt werden können und drittens alle Steueröffnungen und Kanalquerschnitte so groß ausgelegt werden können, daß die Gasgeschwindigkeit erniedrigt wird, so daß die Drossel- und Strömungsverluste gesenkt werden. Dabei wirken die Kolben 112,113 als Absperrkolben, die Kolben 114,115 als Leistungskolben. Auch bei dieser Ausführungsform kann im Kompressionsraum 110 bei der Endverdichtung eine vorteilhafte Flächenabdichtung (mit Labyrinth) zur Anwendung kommen, weil konkave Stirnkolbenflächen 116,117 der Absperrkolben 112,113 mit konvexen Stirnflächen 118,119 der Leistungskolben 114,115 zusammenarbeiten.

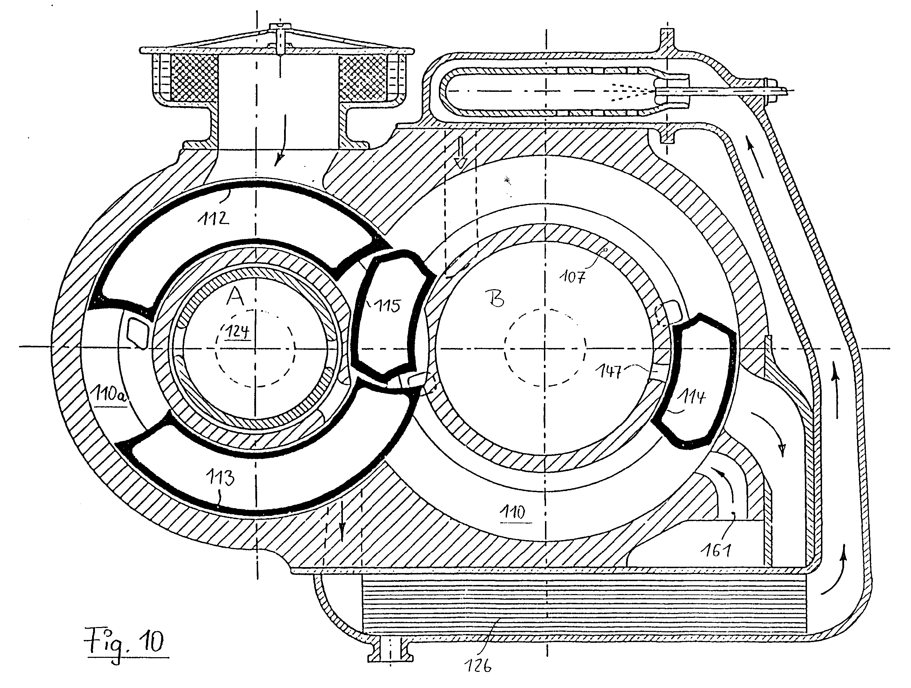

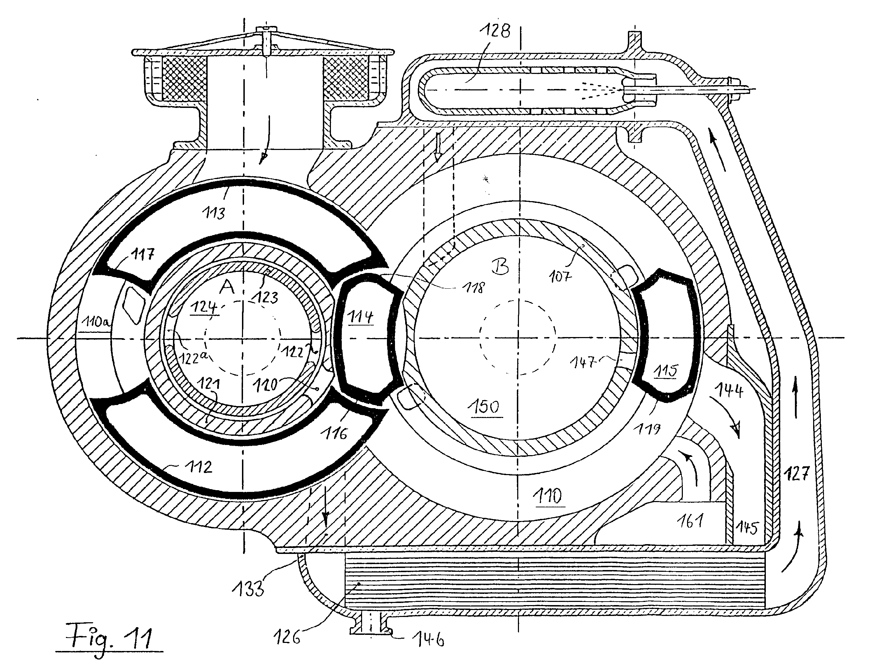

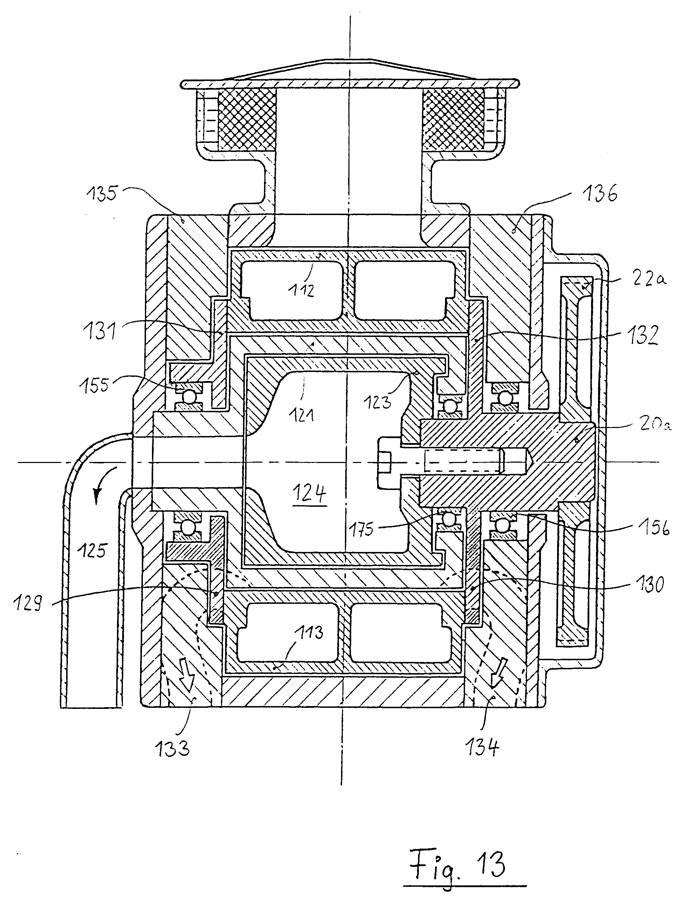

Die Fig. 10,11,12 zeigen die Funktionsweise der zweiten Ausführungsform. In Fig. 10 hat der Absperrkolbenläufer 113 den Kompressionsraum 110 geschlossen, so daß durch die Frischlufteinströmöffnung 161 Frischluft, z.B. von einem kleinen Ladergebläse (nicht eingezeichnet), in den Kompressionsraum 110 des Drehkolbensystems B gefüllt wird. Eine zusätzliche Frischluftmenge, die sich in einem Ringraum 110a des Drehkolbensystems A befindet, wird durch Drehen der Absperrläufer 112,113 ebenfalls in den Kompressionsraum 110 gefördert und mitverdichtet. Der Leistungskolben 114 steht am Anfang des Kompressionstaktes. In Fig. 11 hat der Leistungskolben 114 die Luft komprimiert und einen Teil davon durch eine feststehende, axial verlaufende Ausströmöffnung 120, die in einer stillstehenden Nabe 121 angeordnet und durch eine Steueröffnung 122 des sich mit den Absperrkolben 112,113 drehenden Walzendrehschiebers 123 verbunden ist, in den Druckraum 124 eingeschoben. Vom Druckraum 124 (Fig. 13) führt eine Überströmleitung 125 zu dem Wärmetauscher 126 (Fig. 11). Die Druckluft strömt durch den Wärmetauscher 126 und nimmt dabei Wärmeenergie aus den heißen Abgasen auf. Durch ein wärmeisoliertes Steigrohr 127 strömt die vorgewärmte Druckluft zur kontinuierlich arbeitenden Brennkammer 128. Zusätzlich sind zwei Druckausströmöffnungen 129,130 (Fig. 13) in seitlichen Plattendrehschiebern 131,132 angeordnet, die mit den Absperrkolben 112,113 umlaufen und axial durchströmt mit zwei Abströmkanälen 133,134 zusammenarbeiten, die sich in zwei Seitenplatten 135,136 befinden. Die zugeordneten feststehenden Ventilöffnungen (nicht dargestellt) liegen der Ausströmöffnung 120 benachbart. Abströmkanäle 133,134 hierzu münden in den Wärmetauscher 126 (Fig. 11). Die somit dreifach vorhandenen, gesteuerten Abströmöffnungen des Kompressionsraums 110 erzeugen auch bei hohen Drehzahlen nur geringe Drossel- und Strömungsverluste.

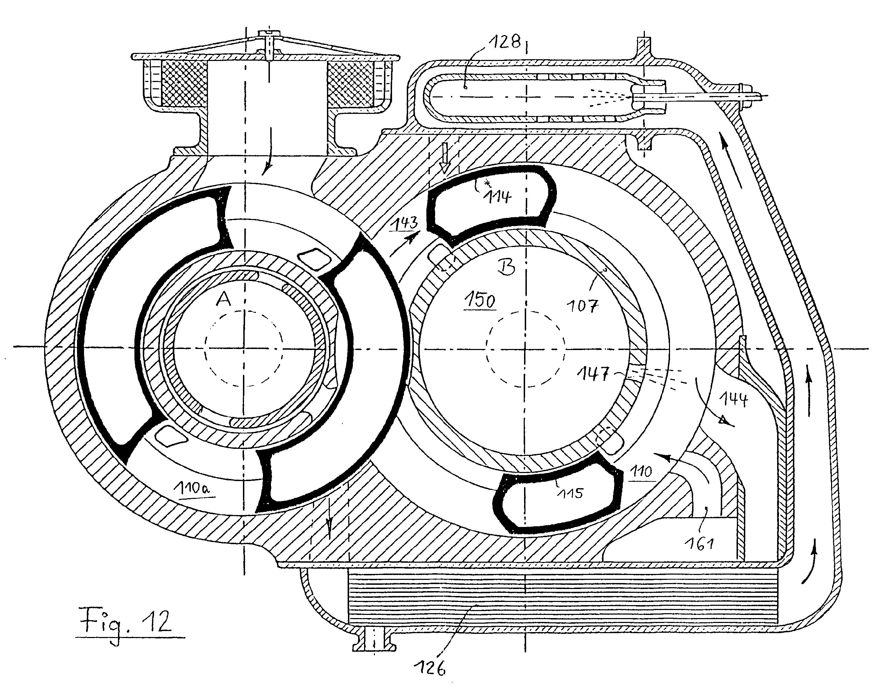

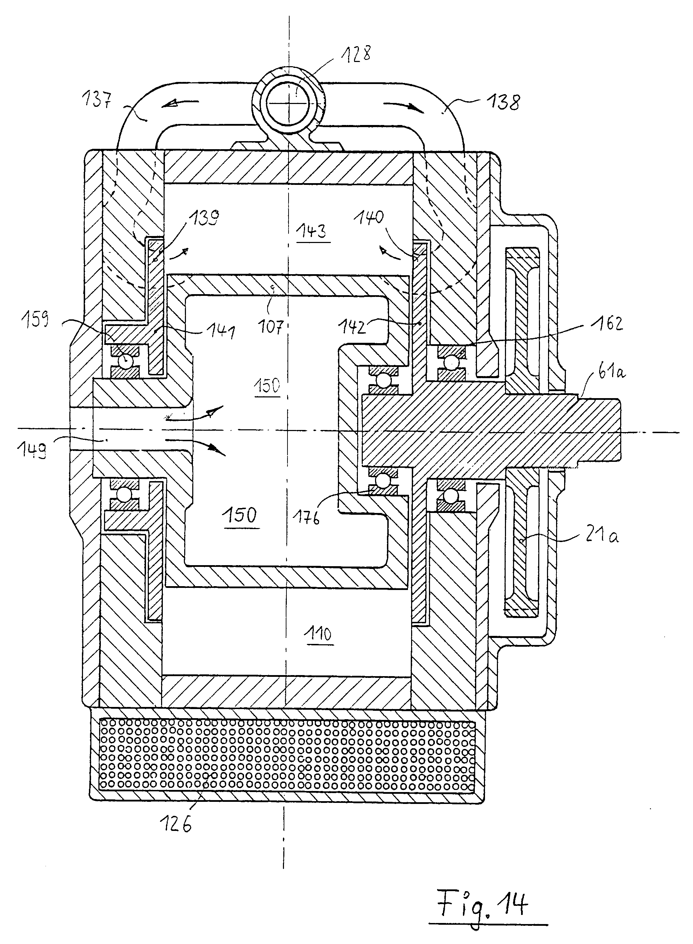

In Fig. 12 hat der Leistungskolben 114 die Anfangsstellung einer Expansion erreicht. Das heiße Arbeits-Druckgas der Brennkammer 128 strömt durch die Heißgaskanäle 137,138 (Fig. 14) weiter durch die Einlaßöffnung 139,140 der Plattendrehschieber 141,142 hinter den Leistungskolben 114 in den Expansionsraum 143 (Fig. 12).

In Fig. 10 hat der Leistungskolben 114 fast die Endstellung der Expansion erreicht. Der Leistungskolben 115 bewegt sich zur Anfangsstellung des Ausschiebetaktes.

In Fig. 11 hat der Leistungskolben 115 das Abgas durch eine Abgasausströmöffnung 144 und eine Abgasleitung 145 in den Wärmetauscher 126 und weiter durch einen Abgasstutzen 146 ausgeschoben. Der Kompressionsraum 110 hat sich wieder mit Frischluft gefüllt.

In Fig. 12 ist besonders gut zu erkennen, wie der Abgas-Ausschiebetakt des Leistungskolbens 114 durch einen Spülschlitz 147, der in einer Hohlnabe 107 im Innengehäuse gegenüber der Abgasausströmöffnung 144 angebracht ist, unterstützt wird.

In Fig. 14 strömt Spülluft, die entweder durch ein Ladegebläse oder auch der Druckluft des Kompressionsteiles entnommen wird, durch die Einströmleitung 149 in einen freien Innenraum 150 (Zuleitungen z.T. nicht dargestellt).

In Fig. 12 strömt die Spülluft vom Innenraum 150 durch den Spülschlitz 147 als Flachstrahl in den Spülbereich. Zusätzlich strömt die Frischluft durch die Frischlufteinlaßöffnung 161 in den Ringraum 110 im Kompressionsbereich.

Weil der Druck der Frischluft etwas über dem Gegendruck des Wärmetauschers 126 liegt, ist es unmöglich, daß Abgase - auch bei hohen Drehzahlen - in den Ringraum 110 im Kompressionsbereich eindringen können. Ein weiterer Vorteil ist, daß in allen Drehzahlbereichen mit hohem Füllungsgrad gefahren werden kann.

Um einen hohen thermodynamischen Wirkungsgrad zu erreichen, muß das Verdichtungsverhältnis ε = 5,3 sein. Dieser Wert entspricht einem Druckverhältnis Πν = 10 bar. Um die Spaltverluste möglichst gering zu halten, sind zusätzliche Maßnahmen möglich. So können bei einer Brennkraftmaschine in Metallbauweise in den einander zugewandten Flächen von Drehkolben und dem Innengehäuse geeignete Wabenstrukturen als Labyrinthdichtungen eingearbeitet - z.B. geätzt werden. Die Wabenstrukturen sollten so geringe Kantenflächen aufweisen, daß durch Berührung infolge Wärmedehnung der Bauteile kein Festsetzen der Rotoren eintritt, weil die Labyrinthoberflächen sich etwas abschleifen.

Bei Brennkraftmaschinen in Metallbauweise mit zusätzlichen Innenbeschichtungen aus wärmeisolierenden Keramikschichten, z.B. Aluminiumtitanat oder Zirkonoxid, durch thermisches Spritzverfahren aufgebracht, können zusätzlich in diesen Keramikschichten Wabenstrukturen als Labyrinthdichtungen im Ätzverfahren eingearbeitet werden, mit dem Vorteil geringer Wärmeverluste, geringen thermischen Verzugs der Bauteile, so daß geringe Spalthöhen möglich und somit sehr geringe Leckverluste erzielbar sind.

Keramische Einlaufschichten, wie sie in Düsentriebwerken Anwendung finden, bieten eine sehr gute Möglichkeit der Spaltabdichtung. Faserverstärkte Hochleistungskeramiken bieten besonders für diese Brennkraftmaschinen-Bauart ein großes Entwicklungspotential.

Obwohl bei dieser Brennkraftmaschine auf einen Kühlkreislauf verzichtet werden könnte, kann es vorteilhaft sein, durch gesteuerte Kühlung des Gehäuses und auch der Rotoren die thermische Ausdehnung soweit zu reduzieren, daß sehr geringe Spalthöhen erreicht werden.

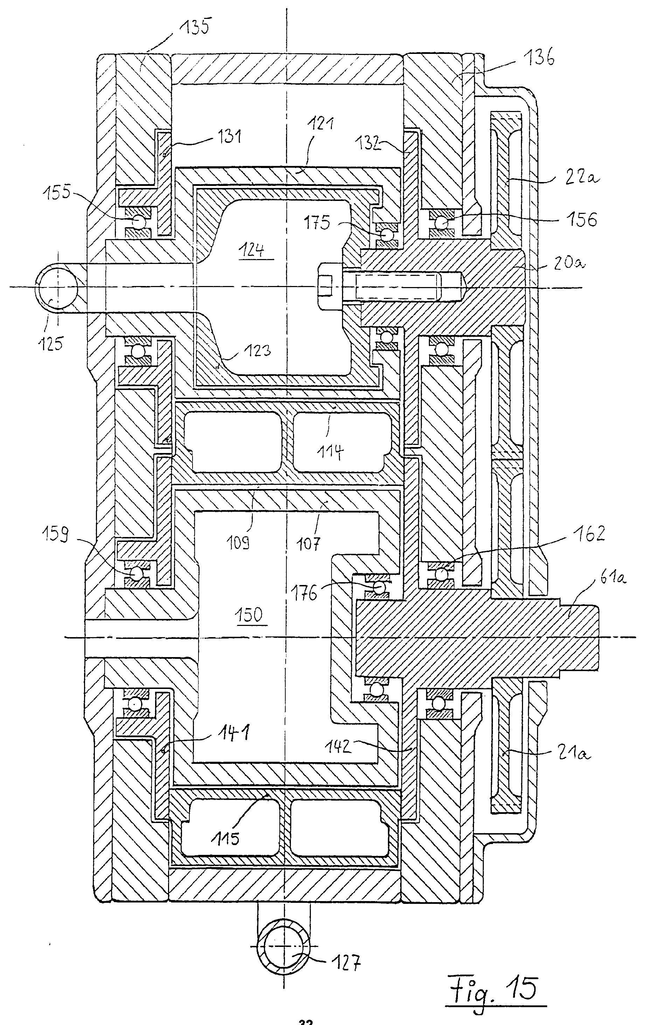

In der zweiten Ausführungsform gemäß den Fig. 9 bis 15 ist eine vorteilhafte weitere Reduktion der bereits in der ersten Ausführungsform erreichten Senkung der Luftpulsation in der Brennkammer zu verzeichnen. Dabei greifen die über Stirnzahnräder 21a,22a synchron laufenden Leistungskolbenläufer 114,115 und die Absperrkolbenläufer 112,113 im Durchdringungsbereich 109 ineinander, so daß pro Kolbenumdrehung zwei Verdichtungs- und zwei Expansionsvorgänge realisiert werden. Am Verdichter und am Expansionsrotor sind die zwei Drehkolben um 180° versetzt mit den beidseitig angeordneten Plattendrehschiebern 131,132;141,142 verschraubt. Dieser symmetrische Aufbau der rotierenden Systemteile ermöglicht den Einsatz von Wälzlagern 155,156,159,162,175,176 (Fig. 15), da ein vibrationsfreier Lauf bei Drehzahlen bis 25.000 U/min erreicht wird, indem die Drehkolben vor den Lagerstellen ausgewuchtet sind.

Bei einer Umdrehung des Verdichterrotors (Drehkolbensystem B) entstehen zwei Ansaug- und zwei Verdichtertakte. Damit ist die Luftmenge je Arbeitstakt geringer und das Verhältnis der Ausströmöffnungsgröße zum Luftdurchsatz wird günstiger. Bereits bei ca. 3.000 U/min wird damit die Luftpulsation in der Brennkammer 128 geglättet und die Verlöschungsgrenze nicht mehr erreicht.

Aus Fig. 15 ist ersichtlich, daß der Walzendrehschieber 123 und der Plattendrehschieber 132 mit einer Welle 20a eine feste Einheit bilden. Dabei sind die Absperrkolbenläufer 112,113 mit den gegenüberliegenden Plattendrehschiebern 131,132 verbunden (Fig. 13). Die Leistungskolbenläufer 114,115 sind entsprechend mit den Plattendrehschiebern 141,142 und der Welle 61a verbunden (Fig. 15). Durch diesen nahezu symmetrischen Aufbau der einzelnen Baugruppen der Drehkolbenbrennkraftmaschine sowohl im Drehkolbensystem A als auch im Drehkolbensystem B sind für alle rotierenden Bauteile 20,20a,60,60a Bedingungen gegeben, um durch die Wälzlagerungen 55,56,59,62 bzw. 155,156,159,162,175,176 einen vibrationsfreien Lauf zu erreichen und gleichzeitig mit verringerten Reibwerten und totalem Massenausgleich eine Verbesserung des Wirkungsgrades der Maschine zu erreichen. Durch eine weitere Gewichts- und Volumensreduzierung kann dieser Effekt noch gesteigert werden.

Jeweils an einem Ende der rotierenden Wellen in beiden Ausführungsbeispielen 20,20a,61,61a der Drehkolbensysteme A,B sind ineinandergreifende Stirnzahnräder 21,22 bzw. 21a,22a angeordnet, die die Synchronität des Laufes der beiden Drehkolbensysteme herstellen (Fig. 8 bzw. 15). In der Ausführungsform gemäß Fig. 8 ist ein Übersetzungsverhältnis der Stirnzahnräder 21,22 von 2:1 dargestellt und gemäß Fig. 15 von 1:1. Die zu den einzelnen Wellen gehörenden äußeren Wälzlager 55,56,59,62 bzw. 155,156,159,162 sind in Seitengehäuseplatten 18,19 bzw. 135,136 angeordnet. Die Hohlnaben 107,121 laufen dabei auf zusätzlichen inneren Wälzlagern 175,176 (Fig. 15). Die damit geschaffene Drehkolbenbrennkraftmaschine erreicht durch die fliehkraftentlasteten Lager eine hohe Drehzahlfestigkeit.

## Patentansprüche

1. Drehkolbenbrennkraftmaschine mit zwei parallelachsig gelagerten und bei gegensinnigem Umlauf ineinandergreifenden Drehkolbensystemen (A,B), deren in einem gemeinsamen Gehäuse (2) ausgeformte Rotationskolbenbahnen ringförmig sind, einander in einem Durchdringungsbereich überschneiden und mit einer getrennten Brennkammer für das komprimierte Gemisch über Kanäle in Verbindung stehen, die durch Absperrventile in Form mit den Drehkolben fest verbundener Steuerkörper gesteuert werden, wobei jeder Drehkolben radial außenseitige Umfangsbereiche in Form von Kreiszylinder-Teilflächen, die während des Umlaufs wechselnd mit dem Gehäuse und mit dem anderen Drehkolbensystem bzw. einer bei jenem Drehkolbensystem feststehenden Nabe Dichtspalte großer Tiefe bilden, und Stirnflächen aufweist, die beim wechselseitigen Eingriff der Drehkolbensysteme ineinander mit Stirnflächen des anderen Drehkolbensystems zusammenwirken, dadurch gekennzeichnet, daß mindestens eines der Drehkolbensysteme (B) als Doppelkolbensystem mit zwei symmetrisch zu einer gemeinsamen Achse (4) um eine feststehende Hohlnabe (7,107) umlaufenden Kolbenläufern (14,15) ausgebildet ist, wobei die Hohlnabe einen Teil der Kanäle bildet und zumindest einen axial verlaufenden und in den Ringraum (10) mündenden Steuerschlitz (33,147) aufweist.

2. Drehkolbenbrennkraftmaschine nach Anspruch 1, dadurch gekennzeichnet, daß die ringförmigen Rotationskolbenbahnen der Drehkolbensysteme (A,B) unterschiedliche Radien (5,6) aufweisen.

3. Drehkolbenbrennkraftmaschine nach Anspruch 1 oder 2, dadurch gekennzeichnet, daß eines (A) der Drehkolbensysteme (A,B) nur einen Kolbenläufer (13) aufweist und gegenüber dem Doppelkolbensystem (B) mit doppelter Drehzahl läuft.

4. Drehkolbenbrennkraftmaschine nach Anspruch 3, dadurch gekennzeichnet, daß die Kolbenläufer des Doppelkolbensystems (B) als Leistungskolbenläufer (14,15) ausgebildet sind, mit denen der Kolbenläufer des anderen Systems (A) als Absperrkolbenläufer (13) zusammenwirkt.

5. Drehkolbenbrennkraftmaschine nach Anspruch 3 oder 4, dadurch gekennzeichnet, daß die Leistungskolbenläufer (14,15) einen Ringraum (10) im Gehäuse (2) in Abschnitte unterteilen, die durch zwei seitliche Plattendrehschieber (16,17) als Steuerkörper phasenweise einerseits mit zwei Abströmkanälen (42,43) zur Brennkammer (52) und andererseits mit zwei aus der Brennkammer (52) führenden Heißgaskanälen (50,51) verbunden sind.

6. Drehkolbenbrennkraftmaschine nach Anspruch 5, dadurch gekennzeichnet, daß in den Plattendrehschiebern (16,17) vorzugsweise paarig gegenüberliegende Steueröffnungen (40-41;45-46;48-49;53-54) angeordnet sind.

7. Drehkolbenbrennkraftmaschine nach Anspruch 6, dadurch gekennzeichnet, daß sich die Steueröffnungen für den Einlaß (48-49;53-54) auf unterschiedlichen Radien gegenüber den Steueröffnungen für den Auslaß (40-41;45-46) in den Plattendrehschiebern (16,17) befinden.

8. Drehkolbenbrennkraftmaschine nach Anspruch 7, dadurch gekennzeichnet, daß jeweils zwei auf gleichem Ringradius liegende Steueröffnungen (48,53), (40,46) auf einem Plattendrehschieber (16) um 180° versetzt angeordnet sind.

9. Drehkolbenbrennkraftmaschine nach Anspruch 7 oder 8, dadurch gekennzeichnet, daß die Steueröffnungen in den Plattendrehschiebern (16,17) um einen Winkel versetzt sind, so daß vor jedem Leistungskolbenläufer (14,15) in Drehrichtung eine Auslaßöffnung und hinter jedem Leistungskolbenläufer (14,15) eine Einlaßöffnung je plattendrehschieber (16,17) liegt.

10. Drehkolbenbrennkraftmaschine nach einem der Ansprüche 5 bis 9, bei der die Leistungskolbenläufer (14,15) um die feststehende Hohlnabe (7) mit axial verlaufendem Steuerschlitz (33) umlaufen, dadurch gekennzeichnet, daß die Plattendrehschieber (16,17) die Hohlnabe seitlich begrenzen und daß der Steuerschlitz (33) unmittelbar vor dem Durchdringungsbereich (9) in den Ringraum (10) mündet.

11. Drehkolbenbrennkraftmaschine nach Anspruch 10, dadurch gekennzeichnet, daß die Hohlnabe (7) am Umfang eine achsparallel Verlaufende, dem radial außenseitigen Umfangsbereich des Absperrkolbenläufers (13) angepaßte Hohlkehle (8) aufweist.

12. Drehkolbenbrennkraftmaschine nach einem der Ansprüche 1 bis 11, dadurch gekennzeichnet, daß die Hohlnabe (7) mit ihrem Umfang den Ringraum (10) für die Leistungskolbenläufer (14,15) radial innenseitig begrenzt und innenseitig einen Walzendrehschieber (34) umfaßt, der mit den Leistungskolbenläufern (14,15) umläuft und zwei einander gegenüberliegende axiale Steueröffnungen (35,36) aufweist.

13. Drehkolbenbrennkraftmaschine nach Anspruch 12, dadurch gekennzeichnet, daß der Walzendrehschieber (34) mit einer Antriebswelle (61) und dem Plattendrehschieber (16) eine feste Einheit bildet.

14. Drehkolbenbrennkraftmaschine nach Anspruch 12 oder 13, dadurch gekennzeichnet, daß der Walzendrehschieber (34) einen Innenraum (37) als Zuführkanal umfaßt, der über eine Abströmleitung (38) und eine Abströmdruckleitung (39) mit dem Wärmetauscher (31) verbunden ist.

15. Drehkolbenbrennkraftmaschine nach einem der Ansprüche 5 bis 9, dadurch gekennzeichnet, daß in den Ringraum (10) des Drehkolbensystems (B) eine Frischlufteinlaßöffnung (30) und eine Abgasausströmöffnung (32) nebeneinander einmünden.

16. Drehkolbenbrennkraftmaschine nach Anspruch 15, dadurch gekennzeichnet, daß die Frischlufteinlaßöffnung (30) über eine Überströmleitung (28) mit dem anderen Drehkolbensystem (A) in Verbindung steht.

17. Drehkolbenbrennkraftmaschine nach einem der Ansprüche 1 bis 16, dadurch gekennzeichnet, daß der auf einer Nabe (12) befindliche Absperrkolbenläufer (13) des Drehkolbensystems (A) in einem einerseits mit einer Lufteinlaßöffnung (26) und andererseits mit einer Luftauslaßöffnung (27) verbundenen Ringraum (11) läuft, der den gemeinsamen Durchdringungsbereich (9) miteinschließt.

18. Drehkolbenbrennkraftmaschine nach Anspruch 17, dadurch gekennzeichnet, daß der Absperrkolbenläufer (13) umfangsseitig eine geschlossene Kontur aufweist.

19. Drehkolbenbrennkraftmaschine nach Anspruch 17 und 18, dadurch gekennzeichnet, daß der Absperrkolbenläufer (13) als Hohlkörper mit unterschiedlicher Wandstärke unwuchtfrei ausgebildet ist.

20. Drehkolbenbrennkraftmaschine nach einem der Ansprüche 17 bis 19, dadurch gekennzeichnet, daß der Absperrkolbenläufer (13) mit einer Welle (20) umläuft.

21. Drehkolbenbrennkraftmaschine nach einem der Ansprüche 17 bis 20, dadurch gekennzeichnet, daß der Absperrkolbenläufer (13) zwei konvex gekrümmte Stirnflächen (47) besitzt.

22. Drehkolbenbrennkraftmaschine nach einem der Ansprüche 17 bis 21, dadurch gekennzeichnet, daß vor der Lufteinlaßöffnung (26) ein Luftfilter (25) vorgesehen ist.

23. Drehkolbenbrennkraftmaschine nach einem der Ansprüche 17 bis 22, dadurch gekennzeichnet, daß seitlich in die Luftauslaßöffnung (27) der Kanal eines Luftgebläses (29) in Richtung der Überströmleitung (28) einmündet.

24. Drehkolbenbrennkraftmaschine nach Anspruch 1 oder 2, dadurch gekennzeichnet, daß beide Drehkolbensysteme (A,B) jeweils zwei symmetrisch zu den Achsen (3,4) umlaufende Kolbenläufer (112,113;114,115) aufweisen.

25. Drehkolbenbrennkraftmaschine nach Anspruch 24, dadurch gekennzeichnet, daß die Kolbenläufer (112,113;114,115) jeweils um 180° versetzt und jeweils mit zumindest an einer axialen Stirnseite befestigten Plattendrehschiebern (131,132;141,142) versehen sind.

26. Drehkolbenbrennkraftmaschine nach Anspruch 4 in Verbindung mit Anspruch 24 oder 25, dadurch gekennzeichnet, daß die Kolbenläufer (114,115) des Leistungsdrehkolbensystems (B) konvexe Stirnflächen (118,119) und die Absperrkolbenläufer (112,113) des Drehkolbensystems (A) konkave Stirnflächen (116,117) umfassen.

27. Drehkolbenbrennkraftmaschine nach Anspruch 26, dadurch gekennzeichnet, daß die Leistungskolbenläufer (114,115) den Ringraum (110) im Gehäuse (2) in Abschnitte unterteilen, die durch die Plattendrehschieber (141,142) als Steuerkörper phasenweise mit den aus der Brennkammer (128) führenden Heißgaskanälen (137,138) verbunden sind.

28. Drehkolbenbrennkraftmaschine nach Anspruch 27, dadurch gekennzeichnet, daß in jedem Plattendrehschieber (141,142) des Leistungsdrehkolbensystems (B) nur zwei Steueröffnungen (139,153) angeordnet sind.

29. Drehkolbenbrennkraftmaschine nach Anspruch 28, dadurch gekennzeichnet, daß die zwei Steueröffnungen (139,153) um 180° versetzt angeordnet sind und sich in Drehrichtung des Drehkolbensystems (B) unmittelbar hinter den Kolbenläufern (114,115) befinden.

30. Drehkolbenbrennkraftmaschine nach einem der Ansprüche 26 bis 29, bei der die Leistungskolbenläufer (114,115) um die feststehende Hohlnabe (107) mit axial verlaufendem Steuerschlitz (147) umlaufen, dadurch gekennzeichnet, daß der Steuer- schlitz als Spülschlitz (147) ausgebildet ist, der gegenüber dem Durchdringungsbereich (109) in den Ringraum (110) einmündet.

31. Drehkolbenbrennkraftmaschine nach einem der Ansprüche 24 bis 30, dadurch gekennzeichnet, daß in den Ringraum (110) des Drehkolbensystems B eine Frischlufteinströmöffnung (161) und eine Abgasausströmöffnung (144) einmünden.

32. Drehkolbenbrennkraftmaschine nach Anspruch 31, dadurch gekennzeichnet, daß die Abgasausströmöffnung (144) größer ist als die unmittelbar in Drehrichtung danebenliegende Frischlufteinlaßöffnung (161).

33. Drehkolbenbrennkraftmaschine nach einem der Ansprüche 24 bis 26, dadurch gekennzeichnet, daß die zwei Absperrkolbenläufer (112,113) des Drehkolbensystems (A) den Ringraum (110a) in zwei gleichgroße Abschnitte teilen, in die jeweils eine, in den Plattendrehschiebern (131,132) um 180° versetzte angeordnete und in Drehrichtung vor den Absperrkolbenläufern (112,113) befindliche, Steueröffnung (129,130) für den Frischluftaustritt in den Wärmetauscher (126) hineinragt.

34. Drehkolbenbrennkraftmaschine nach Anspruch 33, dadurch gekennzeichnet, daß die Absperrkolbenläufer (112,113) eine Hohlnabe (121) umlaufen, die innenseitig einen Walzendrehschieber (123) umfaßt.

35. Drehkolbenbrennkraftmaschine nach Anspruch 34, dadurch gekennzeichnet, daß die Hohlnabe (121) eine zum Durchdringungsbereich (109) gerichtete Steueröffnung (120) und am Umfang eine achsparallel verlaufende, dem radial außenseitigen Umfangsbereich der Leistungskolbenläufer (114,115) angepaßte Hohlkehle (108) aufweist.

36. Drehkolbenbrennkraftmaschine nach Anspruch 34 und 35, dadurch gekennzeichnet, daß der Walzendrehschieber (123) zwei einander gegenüberliegende axiale Steueröffnungen (122,122a) aufweist.

37. Drehkolbenbrennkraftmaschine nach Anspruch 34 bis 36, dadurch gekennzeichnet, daß wechselseitig eine der Steueröffnungen (122,122a) im Walzendrehschieber (123) und die ortsfeste Steueröffnung (120) der Hohlnabe (121) nahe dem Durchdringungsbereich (109) derart zueinander angeordnet sind, daß eine Verbindung zwischen der jeweiligen Steueröffnung (129) im Plattendrehschieber (131) und einem Innenraum (124) besteht.

38. Drehkolbenbrennkraftmaschine nach Anspruch 37, dadurch gekennzeichnet, daß durch die Hohlnabe (121) aus dem Innenraum (124) eine Abströmleitung (125) herausführt.

39. Drehkolbenbrennkraftmaschine nach Anspruch 34 bis 38, dadurch gekennzeichnet, daß eine Luftauslaßöffnung (133) des Drehkolbensystems A direkt in den Wärmetauscher (126) mündet.

40. Drehkolbenbrennkraftmaschine nach einem der Ansprüche 24 bis 39, dadurch gekennzeichnet, daß der Wärmetauscher (126) unterhalb der beiden Drehkolbensysteme (A,B) am Gehäuse (2) angeordnet ist und eine verlängerte Abströmdruckleitung (127) zur obenliegenden Brennkammer (128) führt.

41. Drehkolbenbrennkraftmaschine nach einem der Ansprüche 24 bis 40, dadurch gekennzeichnet, daß der Walzendrehschieber (123) und der Plattendrehschieber (132) mit einer Welle (20a) eine feste Einheit bilden und über die Absperrkolbenläufer (112,113) mit dem gegenüberliegenden Plattendrehschieber (131) verbunden sind.

42. Drehkolbenbrennkraftmaschine nach Anspruch 1 bis 41, dadurch gekennzeichnet, daß alle rotierenden Bauteile (20,20a,60,61a) in Wälzlagern (55,56;59,62;155,156;159, 162;175,176) aufgenommen sind.

43. Drehkolbenbrennkraftmaschine nach Anspruch 42, dadurch gekennzeichnet, daß die äußeren Wälzlager (55,56;59,62;155,156;159,162) in Seitengehäuseplatten (18,19;135,136) angeordnet sind.

44. Drehkolbenbrennkraftmaschine nach Anspruch 42 und 43, dadurch gekennzeichnet, daß die Hohlnaben (107,121) auf zusätzlichen inneren Wälzlagern (175,176) abgestützt sind.

45. Drehkolbenbrennkraftmaschine nach einem der Ansprüche 1 bis 44, dadurch gekennzeichnet, daß sich an einem Ende der Wellen (20,20a;61,61a) der Drehkolbensysteme (A,B) jeweils ineinandergreifende Stirnzahnräder (21,22;21a,22a) befinden.

46. Drehkolbenbrennkraftmaschine nach Anspruch 45, dadurch gekennzeichnet, daß die Stirnzahnräder mit einem Übersetzungsverhältnis von 2:1 (21,22) oder 1:1 (21a,22a) gekoppelt sind.

## Claims

1. A rotary piston internal combustion engine having two axially parallel mounted rotary piston systems (A, B) which interengage when rotating in opposite directions and of which the rotary piston tracks, formed in a common housing (2) are annular, intersect each other in a penetration zone and communicate with a separate combustion chamber for the compressed mixture through ports which are controlled by shut-off valves in the form of control members rigidly connected to the rotary pistons, whereby each rotary piston comprises radially external peripheral zones in the form of parts of a circularly cylindrical surface which, during rotation, form sealing gaps of considerable depth alternately with the housing and with the other rotary piston system or a hub which is fixed on each rotary piston system, and end faces which, during alternating intervention of the rotary piston systems into each other co-operate with end surfaces on the other rotary piston system, characterised in that at least one of the rotary piston systems (B) is constructed as a double piston system with two piston rotors (14, 15) rotating about a fixed hollow hub (7, 107) symmetrically with a common axis (4), the hollow hub forming a part of the ports and having at least one axially extending control slot (33, 147) which opens out into the annular space (10).

2. A rotary piston internal combustion engine according to claim 1, characterised in that the annular rotary piston tracks of the rotary piston systems (A, B) have different radii (5, 6).

3. A rotary piston internal combustion engine according to claim 1 or 2, characterised in that one (A) of the rotary piston systems (A, B) has only one piston rotor (13) and runs at twice the speed of the twin piston system (B).

4. A rotary piston internal combustion engine according to claim 3, characterised in that the piston rotors of the twin piston system (B) are constructed as power piston rotors (14, 15) with which the piston rotor of the other system (A) co-operates as a shut-off piston rotor (13).

5. A rotary piston internal combustion engine according to claim 3 or 4, characterised in that the power piston rotors (14, 15) sub-divide an annular space (10) in the housing (2) into portions which are connected by two lateral rotary slider plates (16, 17) which serve as control members, phasewise on the one hand to two outflow ports (42, 43) to the combustion chamber (52) and on the other to two hot gas ports (50, 51) which lead out of the combustion chamber (52).

6. A rotary piston internal combustion engine according to claim 5, characterised in that control ports (40-41; 45-46; 48-49; 53-54) which are preferably opposite each other in pairs are disposed in the rotary slider plates (16, 17).

7. A rotary piston internal combustion engine according to claim 6, characterised in that the control ports for the inlet (48-49; 53-54) are disposed in the rotary slider plates (16, 17) at different radii in relation to the control ports for the outlet (40-41; 45-46).

8. A rotary piston internal combustion engine according to claim 7, characterised in that in each case two control ports (48, 53), (40, 46) disposed on the same annular radius are disposed on a rotary slider plate (16) and are offset by 180°.

9. A rotary piston internal combustion engine according to claim 7 or 8, characterised in that the control ports in the rotary slider plates (16, 17) are offset by an angle so that in front of each power piston rotor (14, 15) in the direction of rotation there is an outlet port while an inlet port is provided on each rotary slider plate (16, 17) after each power piston rotor (14, 15).

10. A rotary piston internal combustion engine according to one of claims 5 to 9 in which the power piston rotors (14, 15) rotate about the fixed hollow hub (7) with an axially extending control slot (33), characterised in that the rotary slider plates (16, 17) laterally define the hollow hub and in that the control slot (33) opens out into the annular space (10) directly in front of the penetration area (9).

11. A rotary piston internal combustion engine according to claim 10, characterised in that the hollow hub (7) has on its periphery an axially parallel extending groove (8) adapted to the radially outer peripheral area of the shut-off piston rotor (13).

12. A rotary piston internal combustion engine according to one of claims 1 to 11, characterised in that the periphery of the hollow hub (7) radially inwardly defines the annular space (10) for the power piston rotors (14, 15) and comprises on its inside a rotary slider roller (34) which rotates with the power piston rotors (14, 15) and has two oppositely disposed axial control ports (35, 36).

13. A rotary piston internal combustion engine according to claim 12, characterised in that the rotary slider roller (34) forms a rigid unit with a drive shaft (61) and a rotary slider plate (16).

14. A rotary piston internal combustion engine according to claim 12 or 13, characterised in that the rotary slider roller (34) comprises as a feed passage an inner space (37) which is connected to the heat exchanger (31) via a discharge line (38) and a discharge pressure line (39).

15. A rotary piston internal combustion engine according to one of claims 5 to 9, characterised in that a fresh air inlet aperture (30) and an exhaust gas outlet (33) open out beside each other into the annular space (10) in the rotary piston system (B).

16. A rotary piston internal combustion engine according to claim 15, characterised in that the fresh air inlet aperture (30) is connected to the other rotary piston system (A) via a transfer line (28).

17. A rotary piston internal combustion engine according to one of claims 1 to 16, characterised in that the shut-off piston rotor (13) of the rotary piston system (A) which is on a hub (12) runs in an annular space (11) connected on the one hand to an air inlet aperture (26) and on the other to an air outlet orifice (27) and which includes the joint penetration area (9).

18. A rotary piston internal combustion engine according to claim 17, characterised in that the shut-off piston rotor (13) has a closed contour on its periphery.

19. A rotary piston internal combustion engine according to claim 17 and 18, characterised in that the shut-off piston rotor (13) is imbalance-free, being constructed as a hollow body of differing wall thickness.

20. A rotary piston internal combustion engine according to one of claims 17 to 19, characterised in that the shut-off piston rotor (13) rotates with a shaft (20).

21. A rotary piston internal combustion engine according to one of claims 17 to 20, characterised in that the shut-off piston rotor (13) has two convexly curved end faces (47).

22. A rotary piston internal combustion engine according to one of claims 17 to 21, characterised in that an air filter (25) is provided in front of the air inlet aperture (26).

23. A rotary piston internal combustion engine according to one of claims 17 to 22, characterised in that the passage in an air blower (29) discharges laterally into the air outlet orifice (27) in the direction of the transfer line (28).

24. A rotary piston internal combustion engine according to claim 1 or 2, characterised in that both rotary piston systems (A, B) have respectively two piston rotors (112, 113, 114, 115) rotating symmetrically in relation to the axles (3, 4).

25. A rotary piston internal combustion engine according to claim 24, characterised in that the piston rotors (112, 113, 114, 115) are in each case offset by 180° and are respectively provided with rotary slider plates (131, 132; 141, 142) fixed at least on one axial end face.

26. A rotary piston internal combustion engine according to claim 4 in conjunction with claim 24 or 25, characterised in that the piston rotors (114, 115) of the power rotary piston system (B) have convex end faces (118, 119) while the shut-off piston rotors (112, 113) of the rotary piston system (A) have concave end faces (116, 117).

27. A rotary piston internal combustion engine according to claim 26, characterised in that the power piston rotors (114, 115) sub-divide the annular space (110) in the housing (2) into portions which are connected by the rotary slider plates (141, 142), serving as control members, phasewise to the hot gas ports (137, 138) leading out of the combustion chamber (128).

28. A rotary piston internal combustion engine according to claim 27, characterised in that only two control ports (139, 153) are disposed in each rotary slider plate (141, 142) of the power rotary piston system (B).

29. A rotary piston internal combustion engine according to claim 28, characterised in that the two control ports (139, 153) are offset by 180° and, in the direction of rotation of the rotary piston system (B), are disposed directly behind the piston rotors (114, 115).

30. A rotary piston internal combustion engine according to one of claims 26 to 29 in which the power piston rotors (114, 115) rotate about the fixed hollow hub (107) with an axially extending control slot (147), characterised in that the control slot is constructed as a scavenging slot (147) which opens into the annular space (110) opposite the penetration zone (109).

31. A rotary piston internal combustion engine according to one of claims 24 to 30, characterised in that a fresh air inlet aperture (161) and an exhaust discharge orifice (144) open out into the annular space (110) of the rotary piston system (B).

32. A rotary piston internal combustion engine according to claim 31, characterised in that the exhaust gas discharge orifice (144) is larger than the fresh air inlet aperture (161) which is directly beside it in the direction of rotation.

33. A rotary piston internal combustion engine according to one of claims 24 to 26, characterised in that the two shut-off piston rotors (112, 113) of the rotary piston system (A) divide the annular space (110a) into two portions of identical size into each of which projects a control aperture (129, 130) for the outlet of fresh air into the heat exchanger (126), said control apertures being offset by 180° in the rotary slider plates (131, 132) and being disposed in front of the shut-off piston rotors (112, 113) in the direction of rotation.

34. A rotary piston internal combustion engine according to claim 33, characterised in that the shut-off piston rotors (112, 113) rotate about a hollow hub (121) inside which there is a rotary slider roller (123).

35. A rotary piston internal combustion engine according to claim 34, characterised in that the hollow hub (121) has, directed towards the penetration zone (109), a control aperture (120) and on the periphery an axially parallel groove (108) adapted to the radially outer peripheral area of the power piston rotor (114, 115).

36. A rotary piston internal combustion engine according to claim 34 and 35, characterised in that the rotary slider roller (123) comprises two oppositely disposed axial control apertures (122, 122a).

37. A rotary piston internal combustion engine according to claim 34 to 36, characterised in that alternately one of the control apertures (122, 122a) in the rotary slider roller (123) and the fixed control aperture (120) in the hollow hub (121) are so disposed in relation to one another close to the penetration zone (109) that there is a connection between the relevant control aperture (129) in the rotary slider plate (131) and an inner space (124).

38. A rotary piston internal combustion engine according to claim 37, characterised in that a discharge line (125) leads out of the inner space (124) through the hollow hub (121).

39. A rotary piston internal combustion engine according to claim 34 to 38, characterised in that an air outlet orifice (133) of rotary piston system (A) discharges directly into the heat exchanger (126).

40. A rotary piston internal combustion engine according to one of claims 24 to 39, characterised in that a heat exchanger (126) is disposed on the housing (2) below the two rotary piston systems (A, B) and in that an extended discharge pressure line (127) leads to the upper combustion chamber (128).

41. A rotary piston internal combustion engine according to one of claims 24 to 40, characterised in that the rotary slider roller (123) and the rotary slider plate (132) form one fixed unit with a shaft (20a) and are connected via the shut-off piston rotor (112, 113) to the oppositely disposed rotary slider plate (131).

42. A rotary piston internal combustion engine according to claim 1 to 41, characterised in that all rotating components (20, 20a, 60, 61a) are accommodated in rolling-type bearings (55, 56; 59, 62; 155, 156; 159, 162; 175, 176).

43. A rotary piston internal combustion engine according to claim 42, characterised in that the outer rolling-type bearings (55, 56; 59, 62; 155, 156; 159, 162) are disposed in lateral housing panels (18, 19; 135, 136).

44. A rotary piston internal combustion engine according to claim 43 and 43, characterised in that the hollow hubs (107, 121) are supported on additional inner rolling-type bearings (175, 176).

45. A rotary piston internal combustion engine according to one of claims 1 to 44, characterised in that inter-engaging spur cut gear wheels (21, 22; 21a, 22a) are disposed at one end of each of the shafts (20, 20a; 61, 61a) of the rotary piston systems (A, B).

46. A rotary piston internal combustion engine according to claim 45, characterised in that the spur cut gear wheels are coupled with a transmission ratio of 2:1 (21, 22) or 1:1 (21a, 22a).

## Revendications

1. Moteur à combustion interne à pistons rotatifs avec deux systèmes de pistons rotatifs (A, B) montés sur des axes parallèles et s'imbriquant l'un dans l'autre en rotation de sens inverse, pistons rotatifs dont les courses développées dans un carter commun (2) sont de forme annulaire, s'intersectent mutuellement dans un domaine de pénétration et qui sont en liaison avec une chambre de combustion séparée pour le mélange comprimé par l'intermé- diaire de canaux, qui sont commandés par des soupapes d'arrêt sous la forme de corps de commande reliés fixement aux pistons rotatifs, moteur dans lequel chaque piston rotatif comporte des zones périphériques radialement du côté extérieur sous la forme de surfaces partielles cylindriques circulaires, qui forment pendant la révolution alternative- ment avec le carter et avec l'autre système de piston rotatif ou un moyen fixe pour chaque système de piston rotatif des intervalles d'étanchéité de grande étendue, et comporte ainsi des surfaces frontales qui coopèrent lors de l'enga- gement réciproque des systèmes de pistons rotatifs l'un dans l'autre avec les surfaces frontales de l'autre système de piston rotatif, caractérisé en ce que au moins un des systèmes de piston rotatif (B) est réalisé en système à double piston avec deux curseurs (14, 15) symétriquement placés par rapport à un axe commun (4) tournant autour d'un moyeu creux fixe (7; 107), le moyeu creux formant une partie des canaux et comportant au moins une lumière de distribution (33, 147) se développant axialement et débouchant dans l'espace annulaire (10).

2. Moteur à combustion interne à pistons rotatifs selon la revendication 1, caractérisé en ce que les courses de forme annulaire des pistons rotatifs des systè- mes à double piston rotatif (A, B) comportent des rayons (5, 6) différents.

3. Moteur à combustion interne à pistons rotatifs selon la revendication 1 ou la revendication 2, caractérisé en ce que l'un (A) des systèmes de piston rotatif (A, B) a seulement un curseur de piston (13) et tourne avec une vitesse de rotation double par rapport au système de piston double (B).

4. Moteur à combustion interne à pistons rotatifs selon la revendication 3, caractérisé en ce que les curseurs de piston du système de piston double (B) sont réalisés comme des curseurs de piston de puissance (14, 15) avec lesquels coopère le curseur de piston de l'autre système (A) comme curseur de piston d'arrêt (13).

5. Moteur à combustion interne à pistons rotatifs selon les revendications 3 ou 4, caractérisé en ce que les curseurs de piston de puissance (14, 15) subdivisent un espace annulaire (10) du boîtier (2) en segments, qui sont reliés par deux tiroirs rotatifs à plaque latéraux (16, 17) comme corps distributeurs en phase d'une part avec deux canaux d'écoulement (42, 43) vers la chambre de combustion (52) et d'autre part avec deux canaux (50, 51) de gaz très chauds sortant de la chambre de combustion (52).

6. Moteur à combustion interne à pistions rotatifs selon la revendication 5, caractérisé en ce que dans les tiroirs rotatifs à plaque (16, 17) sont placés de préférence des ouvertures de distribution opposées par paire (40-41 ; 45-46; 48-49; 53-54).

7. Moteur à combustion interne à pistons rotatifs selon la revendication 6, caractérisé en ce que les ouvertures de distribution pour l'entrée (48,49; 53-54) se trouvent sur des rayons différents par rapport aux ouvertures de distribution pour la sortie (40-41 ; 45-46) dans les tiroirs rotatifs à plaque (16, 17).

8. Moteur à combustion interne à pistons rotatifs selon la revendication 7, caractérisé en ce que respectivement deux ouvertures de distribution (48, 53), (40, 46) situées sur le même rayon annulaire sont décalées de 180° sur un tiroir rotatif à plaque (16).

9. Moteur à combustion interne à pistons rotatifs selon la revendication 7, caractérisé en ce que les ouvertures de distribution dans les tiroirs rotatifs à plaque (16, 17) sont placés d'un certain angle, de façon que devant chaque curseur de piston de puissance (14, 15) soit situé dans le sens de rotation un orifice d'échappement et derrière chaque curseur de piston de puissance (14, 15) un orifice d'aspiration de chaque tiroir rotatif à plaque (16, 17).

10. Moteur à combustion interne à pistons rotatifs selon une des revendications 5 à 9, dans lequel les curseurs de piston de puissance (14, 15) tournent autour du moyeu creux (7) fixe avec la lumière de distribution (33) tournant axialement, caractérisé en ce que les tiroirs rotatifs à plaque (16, 17) délimitent latéralement le moyeu creux et en ce que la lumière de distribution (33) débouche directement devant la zone de pénétration (9) de l'espace annulaire (10).

11. Moteur à combustion interne à pistons rotatifs selon la revendication 10, caractérisé en ce que le moyeu creux (7) comprend à la périphérie une gorge creuse (8) d'axe parallèle à la périphérie, adaptée radialement à la zone périphérique du côté extérieur du curseur du piston d'arrêt (13).

12. Moteur à combustion interne à pistons rotatifs selon une des revendications 1 à 11, caractérisé en ce que le moyeu creux (7) délimite avec sa périphérie l'espace annulaire (10) pour les curseurs de piston de puissance (14, 15) radialement du côté intérieur et entoure du côté intérieur un tiroir rotatif cylindrique (34), qui tourne avec les curseurs (14, 15) du piston de puissance et comporte deux orifices axiaux de distribution (35, 36) opposés l'un à l'autre.

13. Moteur à combustion interne à pistons rotatifs selon la revendication 12, caractérisé en ce que le tiroir rotatif cylindrique (34) constitue un ensemble fixe avec un arbre de commande (61) et le tiroir rotatif à plaque (16).

14. Moteur à combustion interne à pistons rotatifs selon la revendication 12, caractérisé en ce que le tiroir tournant cylindrique (34) comprend un espace intérieur (37) comme canal d'admission, qui est relié par une conduite d'échappement (38) et une conduite d'échappement sous pression (39) avec l'échangeur thermique (31).

15. Moteur à combustion interne à pistons rotatifs selon une des revendications 5 à 9, caractérisé en ce que dans l'espace annulaire (10) du système de piston rotatif (B) débouchent l'une à côté de l'autre une ouverture d'entrée d'air frais (30) et une ouverture de sortie des gaz d'échappement (32).

16. Moteur à combustion interne à pistons rotatifs selon la revendication 15, caractérisé en ce que l'ouverture d'admission d'air frais (30) est reliée à l'autre système de piston rotatif (A) par une conduite de surcharge (28).

17. Moteur à combustion interne à pistons rotatifs selon une des revendications 1 à 16, caractérisé en ce que le curseur du piston d'arrêt (13) se trouvant sur un moyeu (12) du système de piston rotatif (A) tourne dans un espace annulaire (11) qui est relié d'une part à un orifice d'entrée d'air (26) et d'autre part à un orifice de sortie d'air (27), et qui inclut la zone commune de pénétration (9).

18. Moteur à combustion interne à pistons rotatifs selon la revendication 17, caractérisé en ce que le curseur de piston d'arrêt (13) comporte un contour périphérique fermé.

19. Moteur à combustion interne à pistons rotatifs selon les revendications 17 et 18, caractérisé en ce que le curseur du piston rotatif (13) est réalisé en corps creux sans déséquilibre avec des épaisseurs de parois variables.

20. Moteur à combustion interne à pistons inter- nes selon une des revendications 17 à 19, caractérisé en ce que le curseur du piston d'arrêt (13) tourne avec un arbre (20).

21. Moteur à combustion interne à pistons rotatifs selon une des revendications 17 à 20, caractérisé en ce que le curseur du piston d'arrêt (13) possède deux faces frontales courbes convexes (47).

22. Moteur à combustion interne à pistons rotatifs selon une des revendications 17 à 21, caractérisé en ce que, avant l'orifice d'admission d'air (26) est prévu un filtre à air (25).

23. Moteur à combustion interne à pistons rotatifs selon une des revendications 17 à 22, caractérisé en ce que le canal d'un ventilateur d'air (29) débouche latéralement dans l'ouverture de sortie d'air (27) en direction de la conduite de surcharge (28).

24. Moteur à combustion interne à pistons rotatifs selon les revendications 1 ou 2, caractérisé en ce que les deux systèmes de pistons rotatifs (A, B) comportent respectivement deux curseurs (112, 113 ; 114, 115) tournants symétriquement par rapport aux axes (3, 4).

25. Moteur à combustion interne à pistons rotatifs selon la revendication 24, caractérisé en ce que les curseurs de piston (112, 113 ; 114, 115) sont décalés respectivement de 180° et sont munis respectivement au moins de tiroirs tournants à plaque (131, 132 ; 141, 142) fixés sur une face frontale axiale.

26. Moteur à combustion interne à pistons rotatifs selon la revendication 4 en liaison avec les revendications 24 ou 25, caractérisé en ce que, les curseurs de piston (114, 115) du système de piston rotatif de puissance (B) comportent des surfaces frontales convexes (118, 119) et les curseurs de piston d'arrêt (11, 113) du système de piston rotatif (A) comportent des surfaces frontales (116, 117) concaves.

27. Moteur à combustion interne à pistons rotatifs selon la revendication 26, caractérisé en ce que les curseurs de piston de puissance (114, 115) subdivisent l'espace annulaire (110) du carter (2) en segments, qui sont reliés par les tiroirs rotatifs à plaque (141, 142) comme corps de distribution en phase avec les canaux de gaz chauds (137, 138) sortant de la chambre de combustion (128).

28. Moteur à combustion interne à pistons rotatifs selon la revendication 27, caractérisé en ce que dans chaque tiroir rotatif à plaque (141, 142) du système de piston rotatif de puissance (B) ne sont disposés que deux orifices de distribution (139, 153).

29. Moteur à combustion interne à pistons rotatifs selon la revendication 27, caractérisé en ce que les deux orifices de distribution (139, 153) sont décalés de 180° et se trouvent dans le sens de rotation du système de piston rotatif (B) directement derrière les curseurs de piston (114, 115).

30. Moteur à combustion interne à pistons rotatifs selon une des revendications 26 à 29, dans lequel les curseurs du piston de puissance (114, 115) tournent autour du moyeu creux fixe (107) avec une fente de distribution (147) se développant axialement, caractérisé en ce que la fente de distribution est réalisée comme lumière de balayage (147), qui débouche dans l'espace annulaire (110) vis-à-vis de la zone de pénétration (109).

31. Moteur à combustion interne à pistons rotatifs selon une des revendications 24 à 30, caractérisé en ce que, dans l'espace annulaire (110) du système de piston rotatif (B) débouchent un orifice d'entrée d'air frais (161) et un orifice d'évacuation de gaz d'échappement (144).

32. Moteur à combustion interne à pistons rotatifs selon la revendication 31, caractérisé en ce que l'ouverture d'évacuation du gaz d'échappement (144) est plus grande que l'ouverture d'arrivée d'air frais (161) se situant immédiatement à côté de la première dans le sens de rotation.

33. Moteur à combustion interne à pistons rotatifs selon une des revendications 24 à 26, caractérisé en ce que, les deux curseurs de piston d'arrêt (112, 113) du système de piston rotatif (A) divisent l'espace annulaire (110a) en deux tronçons de même grandeur, dans lesquels dépasse respectivement une ouverture de distribution (129, 130) disposée décalée de 180° dans les tiroirs rotatifs à plaque (131, 132) et se trouvant en avant des curseurs du piston d'arrêt (112, 113) dans le sens de rotation, ouverture de distribution destinée à la sortie de l'air frais dans l'échangeur thermique (126).

34. Moteur à combustion interne à pistons rotatifs selon la revendication 33, caractérisé en ce que les curseurs du piston d'arrêt (112, 113) tournent sur un moyeu creux (121), qui comprend du côté intérieur un tiroir rotatif cylindrique (123).

35. Moteur à combustion interne à pistons rotatifs selon la revendication 34, caractérisé en ce que le moyeu creux (121) comporte un orifice de distribution dirigé vers la zone de pénétration (109) et à la périphérie une gorge creuse (108), se développant parallèlement à l'axe, adaptée à la zone périphérique radiale extérieure des curseurs du piston de puissance (114, 115).

36. Moteur à combustion interne à pistons rotatifs, selon les revendications 34 et 35, caractérisé en ce que le tiroir tournant cylindrique (123) comporte des ouvertures de distribution (122, 122a) axiale opposées l'une à l'autre.

37. Moteur à combustion interne à pistons rotatifs, selon les revendications 34 à 36, caractérisé en ce que, alternativement une des ouvertures de distribution (122, 122a) dans le tiroir tournant cylindrique (123) et l'ouverture de distribution fixe (120) du moyeu creux (121) se trouvent associées l'une à l'autre près de la zone de pénétration (109) de façon qu'une liaison s'établisse entre l'ouverture de distribution correspondante (129) dans le tiroir rotatif à plaque (131) et un espace intérieur (124).

38. Moteur à combustion interne à pistons rotatifs selon la revendication 37, caractérisé en ce que le moyeu creux (121) guide vers l'extérieur hors de l'espace intérieur (124) une conduite d'évacuation de flux (125).

39. Moteur à combustion interne à pistons rotatifs selon les revendications 34 à 38, caractérisé en ce qu'une ouverture de sortie d'air (133) du système de piston rotatif (A) débouche directement dans l'échangeur thermique (126).

40. Moteur à combustion interne à pistons rotatifs selon les revendications 24 à 39, caractérisé en ce que l'échangeur de chaleur (126) est placé contre le carter (2) en-dessous des deux systèmes de pistons rotatifs (A, B) et il oriente une conduite d'évacuation de flux sous pression (127) en prolongement vers la chambre de combustion située en haut.

41. Moteur à combustion interne à pistons rotatifs selon les revendications 24 à 40, caractérisé en ce que le tiroir tournant cylindrique (123) et le tiroir tournant à plaque (132) forment avec un arbre (20a) un ensemble fixe et ils sont reliés par les curseurs de piston d'arrêt (112, 113) avec le tiroir rotatif à plaque (131) situé à l'opposé.

42. Moteur à combustion interne à pistons rotatifs selon les revendications 1 à 41, caractérisé en ce que toutes les pièces tournantes (20, 20a,60, 61a) sont montées dans des paliers à roulement (55, 56 ; 59, 62 ; 155, 156 ; 159, 162 ; 175, 176).

43. Moteur à combustion interne à pistons rotatifs selon la revendication 42, caractérisé en ce que les paliers à roulement extérieurs (55, 56 ; 59, 62 ; 155, 156 ; 159, 162) sont montés dans des plaques latérales du carter (18, 19 ; 135, 136).

44. Moteur à combustion interne à pistons rotatifs selon les revendications 42 et 43, caractérisé en ce que les moyeux creux (107, 121) sont appuyés sur des paliers à roulement intérieurs supplémentaires (175, 176).

45. Moteur à combustion interne à pistons rotatifs selon les revendications 1 à 44, caractérisé en ce qu'il existe à une extrémité des arbres (20, 20a ; 61, 61a) des systèmes de pistons rotatifs (A, B) respectivement des roues dentées frontales engrenant l'une dans l'autre (21, 22 ; 21a, 22a).

46. Moteur à combustion interne à pistons rotatifs selon la revendication 45, caractérisé en ce que les roues dentées frontales sont accouplées avec un rapport de transmission de 2:1 (21, 22) ou de 1:1 (21a, 22a).
